# EUROPEAN PATENT APPLICATION

(11) **EP 1 995 152 A2**
(43) Date of publication of application: **26.11.2008**
(21) Application number: 08156177.1
(22) Date of filing: 14.05.2008
(51) Int. Cl.: B62D 5/04, H02K 16/02

(54) **Vehicle steering apparatus**

(30) Priority: 15.05.2007 JP 2007129501
(71) Applicant: JTEKT CORPORATION, Chuo-ku Osaka-shi Osaka 542-8502 (JP)
(72) Inventor: Higashi, Kenji c/o JTEKT CORPORATION, Osaka-shi, Osaka 542-8502 (JP); Nakano, Shiro c/o JTEKT CORPORATION, Osaka-shi, Osaka 542-8502 (JP); Inayama, Hirohide c/o JTEKT CORPORATION, Osaka-shi, Osaka 542-8502 (JP); Niguchi, Noboru c/o JTEKT CORPORATION, Osaka-shi, Osaka 542-8502 (JP); Yoshioka, Kazuya c/o JTEKT CORPORATION, Osaka-shi, Osaka 542-8502 (JP)
(74) Representative: TBK-Patent

(57) **Abstract**

An electric motor (4) provided in a vehicle steering apparatus (1) includes a stator (25) coaxially surrounding a steering shaft (5), an inner rotor (26) disposed on the inner periphery of the stator (25), and an cuter rotor (27) disposed on the outer periphery of the stator (25). The facing area between the stator (25) and the rotor can be increased by providing the inner rotor (26) and the outer rotor (27) in the electric motor. Consequently, the electric motor (4) can be miniaturized while a certain output thereof is maintained. The vehicle steering apparatus (1) can be miniaturized by miniaturizing the electric motor (4).

## Description

### BACKGROUND OF THE INVENTION

### 1. Field of the Invention

The present invention relates to a vehicle steering apparatus for use in a vehicle, such as an automobile.

### 2. Related Art

Some vehicle steering apparatus for use in a vehicle, such as an automobile, uses an electric motor to assist a driver' s steering operation. For example, the following JP-A-2005-145436 has proposed what is called a direct drive vehicle steering apparatus in which an output torque of an electric motor is transmitted directly to a steering shaft without the intermediation of a reduction mechanism.

Vehicle steering apparatuses are disposed in a vehicle interior that is a limited space. Thus, preferably, the vehicle steering apparatuses are compact.

On the other hand, in vehicle steering apparatuses of the direct drive type, an output torque of an electric motor is not amplified by a reduction mechanism. Accordingly, the vehicle steering apparatuses of the direct drive type require a high output electric motor. Therefore, the vehicle steering apparatuses of the direct drive type often use a large electric motor. This contradicts the request for the miniaturization of the vehicle steering apparatuses.

### SUMMARY OF THE INVENTION

The invention is accomplished against such a background. An object of the invention is to miniaturize a vehicle steering apparatus.

To achieve the foregoing object, according to the invention, there is provided a vehicle steering apparatus (1, 1a, 1b, 1c, 1d, 1e) having an electric motor (4, 104, 204, 304), provided coaxially with a steering shaft (5, 54, 55, 57), for giving a steering force to the steering shaft. In the vehicle steering apparatus, the electric motor includes an annular stator (25) fixed to a vehicle-body-side member (100), a cylindrical inner rotor (26) configured to face an inner periphery of the stator and to be rotatable around an axis line (L1) of the steering shaft, and a cylindrical outer rotor (27) configured to face an outer periphery of the stator and to be rotatable around the axis line of the steering shaft.

According to the invention, the inner rotor and the outer rotor are disposed along the inner periphery and the outer periphery of the stator, respectively. Therefore, as compared with an electric motor having only one of the inner rotor and the outer rotor, the electric motor according to the invention can increase the facing area between the stator and the rotor. Consequently, an output of the electric motor can be increased. Accordingly, the electric motor can be miniaturized while a certain output is maintained. The miniaturization of the electric motor results in the miniaturization of the vehicle steering apparatus. Thus, the mountability of the vehicle steering apparatus to a vehicle can be enhanced.

Further, the rotor is smaller than the stator in the volume for generating a magnetic force of the same magnitude. Thus, the electric motor can be further miniaturized by providing a pair of rotors therein.

A steering shaft connected to a steering member, such as a steering wheel, can be used as the steering shaft. In a case where a rack-and-pinion mechanism is used as a steering mechanism for steering a steered wheel, a pinion shaft can be used as the steering shaft. Alternatively, a rack shaft can be used as the steering shaft. Alternatively, another shaft can be used as the steering shaft.

That is, the vehicle steering apparatus according to the invention can be what is called a column-assist type one. Alternatively, the vehicle steering apparatus according to the invention can be what is called a pinion-assist type one. Alternatively, the vehicle steering apparatus according to the invention can be what is called a rack-assist type one. The vehicle steering apparatus according to the invention can be configured so that the steering member and the steering mechanism are mechanically connected to each other. Alternatively, the vehicle steering apparatus according to the invention can be a vehicle steering apparatus (what is called a steer-by-wire type one) configured so that the steering member and the steering mechanism are not mechanically connected to each other.

The outer rotor may be used also as the housing of the electric motor. In this case, the electric motor can be further miniaturized. In addition, the electric motor can be reduced in weight.

The stator may be sandwiched between the inner cylinder (34) and the outer cylinder (35), which are fixed to the vehicle-body-side member. In this case, the stator is sandwiched between the inner cylinder and the outer cylinder, which are fixed to the vehicle-body-side member. Thus, the stator can securely be fixed to the vehicle-body-side member. Consequently, an output of the electric motor can be stabilized.

The stator may include a stator core (129) which includes an annular yoke (31), and a plurality of teeth (32) formed on an inner periphery of the yoke so as to be projected therefrom and as to be arranged in a circumferential direction (Y1) of the stator at intervals so that a coil (30) is wound around each of the plurality of teeth. An end portion of the yoke is located in an axial direction of the stator in the yoke and includes a first extension part (47) extended in the axial direction (X2) of the stator. An end portion of each of the teeth is located in the axial direction of the stator therein and includes a second extension part (48) extended in the axial direction of the stator. The first extension part and the second extension part are fixed to the vehicle-body-side member. In this case, the first and second extension parts, which are a part of the stator core, are fixed to the vehicle-body-side member. Thus, the stator can securely be fixed to the vehicle-body-side member. Consequently, an output of the electric motor can be stabilized.

In the foregoing description, reference numerals in parentheses designate associated components of embodiments that will be described later. However, the reference numerals in the parentheses have not been described for purposes of limitation of the scope of the invention.

### BRIEF DESCRIPTION OF THE DRAWINGS

FIG. 1 is an illustrative cross-sectional view illustrating the schematic configuration of an electric power steering apparatus according to an embodiment of the invention.
FIG. 2 is an illustrative enlarged cross-sectional view of a part of the electric power steering apparatus according to the embodiment of the invention.
FIG. 3 is an illustrative cross-sectional view of a part of an electric motor, which is taken along line III-III shown in FIG. 1.
FIG. 4 is an illustrative enlarged cross-sectional view of a part of an electric power steering apparatus according to another embodiment of the invention.
FIG. 5 is an illustrative enlarged cross-sectional view of a part of an electric power steering apparatus according to still another embodiment of the invention.
FIG. 6 is an illustrative view illustrating the appearance of a stator core provided in the electric power steering apparatus according to the still another embodiment of the invention.
FIG. 7 is a schematic view illustrating the schematic configuration of an electric power steering apparatus according to a yet another embodiment of the invention.
FIG. 8 is a schematic view illustrating the schematic configuration of an electric power steering apparatus according to a further another embodiment of the invention.
FIG. 9 is a schematic view illustrating the schematic configuration of a vehicle steering apparatus according to a still another embodiment of the invention.

### DETAILED DESCRIPTION OF THE PREFERRED EMBODIMENTS

Hereinafter, preferred embodiments of the invention are described with reference to the accompanying drawings.

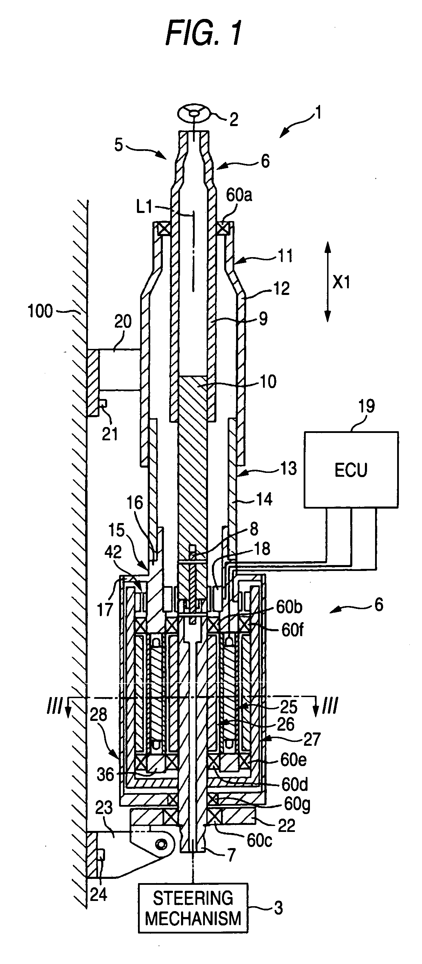

FIG. 1 is an illustrative cross-sectional view illustrating the schematic configuration of an electric power steering apparatus according to an embodiment of the invention.

Referring to FIG. 1, an electric power steering apparatus 1 serving as a vehicle steering apparatus includes a steering member 2, such as a steering wheel, a steering mechanism 3 for steering steered wheels (not shown) in response to a steering operation of the steering member 2, and an electric motor 4 for steering assist. For example, a rack-and-pinion mechanism is used as the steering mechanism 3.

The steering member 2 and the steering mechanism 3 are mechanically connected to each other via a steering shaft 5. The steering operation (rotation) of the steering member 2 is transmitted to the steering mechanism 3 via the steering shaft 5. Then, the rotation transmitted to the steering mechanism 3 is converted into an axial movement of a rack shaft (not shown). Consequently, the steered wheel is steered.

The steering shaft 5 linearly extends. The electric motor 4 is coaxially connected to the steering shaft 5. In the present embodiment, the steering shaft 5 functions as a steering shaft. That is, the electric power steering apparatus 1 according to the present embodiment is a vehicle steering apparatus of what is called a column assist type. Hereinafter, a part at the side of the steering member 2 along an axial direction X1 of the steering shaft 5 is referred to as an upper side, while a part at the side of the steering mechanism 3 thereof is referred to a lower side.

The steering shaft 5 includes an input shaft 6 and an output shaft 7. The input shaft 6 and the output shaft 7 are coaxially connected to each other via a torsion bar 8. The input shaft 6 and the output shaft 7 can perform a relative rotation.

The input shaft 6 includes an upper shaft 9 and a lower shaft 10. The steering member 2 is corotatably connected to the top portion of the upper shaft 9. The output shaft 7 is connected to the bottom portion of the lower shaft 10 via the torsion bar 8.

The upper shaft 9 is cylindrical. The top portion of the lower shaft 10 is, for example, serration-fit into the inner periphery of the bottom portion of the upper shaft 9. The upper shaft 9 and the lower shaft 10 are connected to each other so as to be corotatable around the central axis line L1 of the steering shaft 5 and as to be able to perform a relative rotation in the axial direction X1 of the steering shaft 5.

The steering shaft 5 passes through the inner periphery of a cylindrical steering column 11. The steering shaft 5 is supported rotatably around the steering column 11. The steering column 11 includes a cylindrical upper tube 12 and a cylindrical lower tube 13, which are fit to each other.

Each of the upper tube 12 and the lower tube 13 extends in the axial direction X1. The upper tube 12 and the lower tube 13 are disposed coaxially with each other. The upper tube 12 and the lower tube 13 are connected to each other so as to perform a relative movement in an axial direction (the same direction as the axial direction X1 illustrated in FIG. 1) of the steering column 11. More specifically, the top portion of the lower tube i3 is fit into the inner periphery of the upper tube 12.

The inner peripheral surface of the upper tube 12 and the outer peripheral surface of the lower tube 13 are, for example, frictionally engaged with each other on a fitting portion on which the upper tube 12 and the lower tube 13 are fit to each other. Accordingly, when a relative movement in the axial direction X1 between the upper tube 12 and the lower tube 13 is caused, resistance is imposed to one or both of the upper tube 12 and the lower tube 13.

The upper tube 12 supports the upper shaft 9 via a bearing 60a so that the upper shaft 9 can rotate. The upper shaft 9 and the upper tube 12 are movably connected to each other as to be able to move together in the axial direction X1 by the bearing 60a. The lower tube 13 includes a first cylindrical tube 14 and a second cylindrical tube 15, which are fit to each other. The first tube 14 and the second tube 15 are fixed to each other. The first tube 14 is disposed above the second tube 15 in the axial direction X1. The second tube 15 includes a cylindrical portion 16 extending along the axial direction X1, and includes also an annular flange portion 17 protruding radially outwardly from the outer peripheral surface of the cylindrical portion 16.

The upper tube 12 is connected to the first tube 14. The second tube 15 supports the top portion of the output shaft 7 via a bearing 60b so that the output shaft 7 can rotate. A torque sensor 18 for detecting a steering torque is disposed on the inner periphery of the second tube 15. More particularly, a torque sensor 18 is disposed at a position corresponding to a connecting portion, at which the input shaft 6 and the output shaft 7 are connected, on the inner periphery of the second tube 15.

The torque sensor 18 detects a steering torque, based on a relative-rotation displacement amount between the input shaft 6 and the output shaft 7. A result of detection of a torque, which is detected by the torque sensor 18, is input to an electronic control unit (ECU) 19.

The steering column 11 is fixed to a vehicle-body-side member 100 with a predetermined fixing strength by a first bracket 20 fixed to the outer periphery of the upper tube 12. More specifically, the first bracket 20 is fixed to the vehicle-body-side member 100 via, for example, a synthetic resin pin 21.

When an impact of a magnitude having a value equal to or greater than a predetermined value is applied to the first bracket 20, for example, upon a vehicle collision, the pin 21 is fractured. Thus, the fixation between the upper tube 12 and the vehicle-body-side member 100 is released. Accordingly, the steering member 2, the upper shaft 9, and the upper tube 12 move together downwardly in the axial direction X1 of the vehicle-body-side member 100. At that time, the upper tube 12 moves downwardly in the axial direction X1 to the lower tube 13. Resistance acting in a direction opposite to the direction, in which the upper tube 12 moves, is imposed to the upper tube 12 from the lower tube 13. Consequently, an impact imposed to the steering member 2 from a driver due to what is called a secondary collision is absorbed.

The steering shaft 5 is rotatably supported by the vehicle-body-side member 100 via the bearing 60c under the electric motor 4. More particularly, the bottom portion of the output shaft 7 is supported by an annular bearing holding member 22 via a bearing 60c. The bearing holding member 22 is fixed to the vehicle-body-side member 100 via a second bracket 23. The second bracket 23 is fixed to the vehicle-body-side member 100 with a fixing bolt 24.

Next, the electric motor 4 is described below in detail.

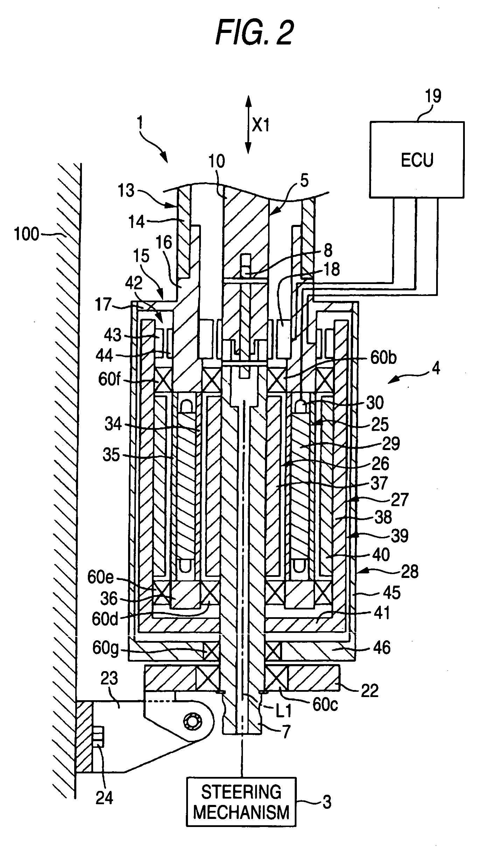

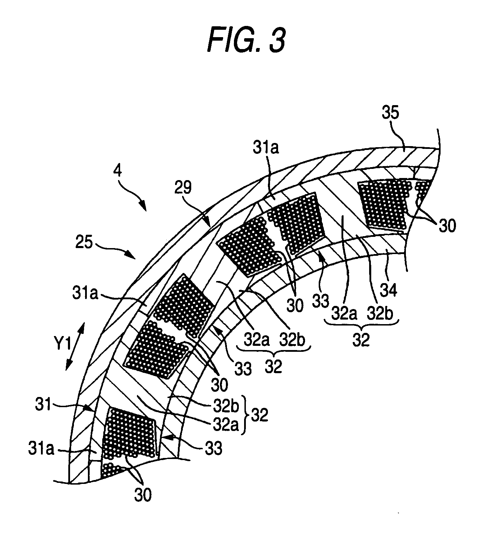

FIG. 2 is an illustrative enlarged cross-sectional view of a part of the electric power steering apparatus according to the embodiment of the invention. FIG. 3 is an illustrative cross-sectional view of a part of the electric motor 4, which is taken along line III-III shown in FIG. 1.

Referring to FIG. 2, the electric motor 4 according to the present embodiment is a brushless motor. The electric motor 4 includes an annular stator 25 coaxially surrounding the steering shaft 5, a cylindrical inner rotor 26 facing the inner periphery of the stator 25 across a gap, and a cylindrical outer rotor 27 facing the outer periphery of the stator 25 across a gap. The inner rotor 26 and the outer rotor 27 coaxially surround the steering shaft 5. The stator 25, the inner rotor 26, and the outer rotor 27 are housed in a cylindrical motor housing 28.

Referring to FIGS. 2 and 3, the stator 25 includes an annular stator core 29, and a plurality of coils 30 wound around the stator core 29. More specifically, the stator core 29 includes a cylindrical yoke 31 constituting an outer peripheral portion of the stator core 29, and a plurality of teeth 32 protruding from the inner peripheral surface of the yoke 31 in a radially inward direction of the yoke 31.

The plurality of teeth 32 are arranged at equal intervals in a circumferential direction Y1 of the stator core 29. Each of the teeth 32 is cross-sectionally T-shaped. More particularly, each of the teeth 32 includes a radial extension portion 32a extended in a radially inward direction of the yoke 31 from the inner peripheral surface of the yoke 31, and a circumferential extension portion 32b that is connected to an inner end portion of the radial extension portion 32a and that extends along a circumferential direction of the yoke 31.

Each of the teeth 32 has a length substantially equal to that in the axial direction X1 of the yoke 31. The plurality of coils 30 are wound around the plurality of teeth 32, respectively. Each of the coils 30 is electrically connected to the ECU 19. Electrical power is supplied to each of the coils 30 from an electric power supply (not shown) via a drive circuit (not shown) of the ECU 19.

The stator core 29 includes a plurality of arcuate split cores 33. That is, the yoke 31 includes a plurality of split elements 31a obtained by dividing the yoke 31 in the circumferential direction Y1. Each of the teeth 32 is formed in an associated one of the split elements 31a. Each of the split cores 33 includes an associated one of the split elements 31a and an associated one of the teeth 32. The plurality of split cores 33 are circularly combined with one another. Incidentally, the stator core 29 can be of the integrated type that is not divided in the circumferential direction Y1.

Referring to FIG. 2, the stator core 29 is held by an inner cylinder 34 disposed on the inner periphery thereof, and an outer cylinder 35 disposed on the outer periphery thereof. Each of the inner cylinder 34 and the outer cylinder 35 is a cylindrical member which extends along the axial direction X1 and which is longer in the length in the axial direction X1 than the stator 25. Each of the inner cylinder 34 and the outer cylinder 35 is made of, for example, a metal.

The inner cylinder 34 is fixed to the inner periphery of the stator core 29 by being, for example, pressed or shrinkage-fit thereinto. The stator core 29 is held between the inner cylinder 34 and the outer cylinder 35 by being sandwiched therebetween.

An annular support member 36 is fixed to the bottom portions of the inner cylinder 34 and the outer cylinder 35 by, for example, welding or adhesion. The support member 36 coaxially surrounds the output shaft 7. The inside diameter and the outside diameter of the support member 36 are substantially equal to those of the cylindrical portion 16 of the second tube 15. The support member 36 supports the output shaft 7 via a bearing 60d so that the output shaft 7 can rotate.

The top portions of the inner cylinder 34 and the outer cylinder 35 are fixed to the bottom portion of the cylindrical portion 16 of the second tube 15 by, for example, welding or adhesion. The stator 25 is fixed to the vehicle-body-side member 100 via the inner cylinder 34 and the outer cylinder 35. That is, the second tube 15, to which the inner cylinder 34 and the outer cylinder 35 are fixed, is fixed to the first tube 14. The first tube 14 is fixed to the upper tube 12. The upper tube 12 is fixed to the vehicle-body-side member 100 via the first bracket 20.

The inner rotor 26 includes a plurality of permanent magnets 37 arranged circularly. Each of the permanent magnets 37 is substantially equal in the length in the axial direction X1 to the stator 25. An outer surface of each of the permanent magnets 37 is fixed to the outer peripheral surface of the output shaft 7 at a position facing the inner periphery of the stator 25. The plurality of permanent magnets 37 are arranged in the circumferential direction of the steering shaft 5. The polarities of the magnet poles of each pair of adjacent ones of the permanent magnets 37 differ from each other. Magnets poles including alternately arranged N-poles and S-poles are formed on the outer periphery of the inner rotor 26. Each permanent magnet 37 and the output shaft 7 can rotate together around the central axis line L1 of the steering shaft 5. When an electromagnetic force generated by the stator 25 is applied to each permanent magnet 37, a rotating torque is directly transmitted to the output shaft 7.

The outer rotor 27 includes a cup-like main part 39 having a cylindrical peripheral wall portion 38, and includes also a plurality of permanent magnets 40 held on the inner periphery of the peripheral wall portion 38. The stator 25 and the inner rotor 26 are disposed on the inner periphery of the main part 39.

The peripheral wall portion 38 of the main part 39 extends along the axial direction X1 and is longer in the length in the axial direction X1 than the stator 25. The peripheral wall portion 38 coaxially surrounds the output shaft 7. An annular end wall 41 extending from the bottom of the peripheral wall portion 38 in a radially inward direction of the peripheral wall portion 38 is provided on the bottom of the peripheral wall portion 38. The inner peripheral surface of the end wall 41 is fixed to the outer peripheral surface of the output shaft 7. The end wall 41 and the output shaft 7 are rotatably connected to each other. That is, the main part 39 and the output shaft 7 are connected to be able to corotate around the central axis line L1 of the steering shaft 5.

The peripheral wall portion 38 is such that the bottom portion thereof is rotatably supported by the support member 36 via the bearing 60e, and that the top portion thereof is rotatably supported by the cylindrical portion 16 of the second tube 15 via a bearing 60f. The peripheral wall portion 38 is supported at two places that are located at a distance in the axial direction X1. Thus, the peripheral wall portion 38 can stably rotate without run-out. Consequently, a stable rotating torque is transmitted from the electric motor 4 to the output shaft 7.

The rotational position of the peripheral wall portion 38 is detected by a resolver 42 serving as a rotational position detecting device. The resolver 42 includes an annular resolver rotor 43, which is fixed to the inner peripheral surface of the peripheral wall portion 38 above the bearing 60f supporting the top portion of the peripheral wall portion 38, and includes also a resolver stator 44 fixed to the outer peripheral surface of the cylindrical portion 16 of the second tube 15 above the bearing 60f.

The resolver 42 can detect the rotational position of the outer rotor 27 by detecting the rotational position of the peripheral wall portion 38. Because the outer rotor 27, the output shaft 7, and the inner rotor 26 rotate together, the resolver 42 can detect the rotational position of the inner rotor 26 by detecting the rotational position of the peripheral wall portion 38. A result of detection of the rotational positions of the outer rotor 27 and the inner rotor 26, which are detected by the resolver 42, is input to the ECU 19. Incidentally, the rotational position detecting device according to the present embodiment is not limited to the resolver 42. Another detecting device, such as a rotary encoder, can be used as the rotational position detecting device.

Each permanent magnet 40 is substantially equal in the length in the axial direction X1 to the stator 25. Each permanent magnet 40 is fixed to the inner peripheral surface of the peripheral wall portion 38 at a position at which an inner surface thereof faces the outer peripheral surface of the stator 25. The plurality of permanent magnets 40 are arranged in the circumferential direction of the peripheral wall portion 38. The polarities of the magnet poles of each pair of adjacent ones of the permanent magnets 40 differ from each other. Magnets poles including alternately arranged N-poles and S-poles are formed on the inner periphery of the outer rotor 27. Each permanent magnet 40 and the main part 39 can corotate. When an electromagnetic force generated by the stator 25 is applied to each permanent magnet 40, a rotating torque is directly transmitted to the output shaft 7 via the peripheral wall portion 38 and the end wall 41.

Amotor housing 28 includes a cylindrical portion 45 coaxially surrounding the output shaft 7, and includes also an annular end wall 46 extending from the bottom of the cylindrical portion 45 in a radially inward portion of the cylindrical portion 45. The stator 25, the inner rotor 26, and the outer rotor 27 are disposed on the inner periphery of the cylindrical portion 45.

The cylindrical portion 45 extends along the axial direction X1 and is longer in the length in the axial direction X1 than the outer rotor 27. The cylindrical portion 45 surrounds the outer rotor 27 radially across a gap. The inner peripheral surface of the top part of the cylindrical portion 45 is fixed to the outer peripheral surface of the flange portion 17 of the second tube 15. A bearing 60g intervenes between the inner peripheral surface of the end wall 46 and the outer peripheral surface of the output shaft 7. The end wall 46 supports the output shaft 7 via the bearing 60g so that the output shaft 7 can rotate.

The electric motor 4 is controlled by the ECU 19. That is, the ECU 19 controls the electric motor 4, based on a steering torque input to the steering member 2, on the rotational positions of the inner rotor 26 and the outer rotor 27, and on a vehicle speed input from a vehicle speed sensor (not shown). Consequently, a rotating torque serving as a steering assist force is transmitted from the electric motor 4 directly to the output shaft 7. Accordingly, the steering assist force is transmitted to the steering mechanism 3 so as to assist a driver's steering operation.

As described above, in the present embodiment, the inner rotor 26 and the outer rotor 27 are disposed in the inner periphery and the outer periphery of the stator 25, respectively. Therefore, as compared with an electric motor having only one of the inner rotor and the outer rotor, the facing area between the inner rotor and the outer rotor can be increased. Consequently, an output of the electric motor 4 can be increased. Accordingly, the electric motor 4 can be miniaturized while a certain output is maintained. The miniaturization of the electric motor 4 results in the miniaturization of the electric power steering apparatus 1. Thus, the mountability of the electric power steering apparatus 1 to a vehicle can be improved. The rotor is smaller than the stator in the volume needed to generate a magnetic force of the same magnitude. Consequently, the electric motor 4 can be further miniaturized by providing a pair of rotors therein.

Additionally, in the present embodiment, the stator 25 is fixed to the inner cylinder 34 and the outer cylinder 35. Thus, the stator 25 can securely be fixed to the vehicle-body-side member 100. Consequently, the vibration of the stator 25 can be prevented. The stable rotating torque can be transmitted from the electric motor 4 to the output shaft 7. Because the inner cylinder 34 and the outer cylinder 35 have simple shapes (cylindrical shapes), the manufacturing cost of these cylinders can be suppressed.

That is, in a case where the stator 25 is embedded in a synthetic resin member (what is called a resin mold) without using the inner cylinder 34 and the outer cylinder 35 and where this synthetic resin member is fixed to the second tube 15, the stator 25 cannot securely be fixed to the second tube 15 due to the low stiffness of the synthetic resin member. Further, in a case where the stator 25 is fixed to a metal cage stator holding member, and where this stator holding member is fixed to the second tube 15, the stator 25 can securely be fixed to the vehicle-body-side member 100. However, the manufacturing cost of the stator holding member is high due to the complex shape thereof. Thus, these problems can be solved by fixing the stator 25 to the vehicle-body-side member 100 using the inner cylinder 34 and the outer cylinder 35.

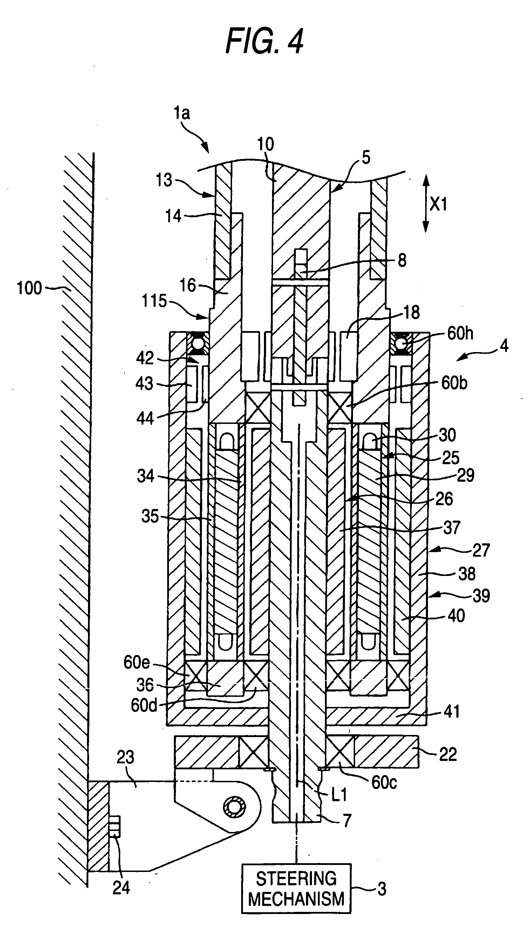

FIG. 4 is an illustrative enlarged cross-sectional view of a part of an electric power steering apparatus 1a according to another embodiment of the invention. In FIG. 4, a component equivalent to each part shown in FIG. 2 is designated with the same reference numeral as that used to denote the equivalent part shown in FIG. 2. Thus, the description of such components is omitted.

Referring to FIG. 4, the embodiment illustrated in FIG. 4 differs from that illustrated in FIG. 2 mainly in that the main part 39 of the outer rotor 27 is used also as a motor housing. Additionally, a bearing with a seal (for example, a rolling ball bearing with double seals) is used as the bearing 60h intervening between the top portion of the peripheral wall portion 38 of the main part 39 and the cylindrical portion 16 of the second tube 115. The second tube 115 includes the cylindrical portion 16.

In the present embodiment, the main part 39 is used also as a motor housing. Thus, the electric motor 4 can be reduced in size and weight. Further, foreign substances, such as grit and dust, can be prevented by using a bearing with a seal as the bearing 60h from entering the electric motor 4. Consequently, the durability of the electric motor 4 can be enhanced.

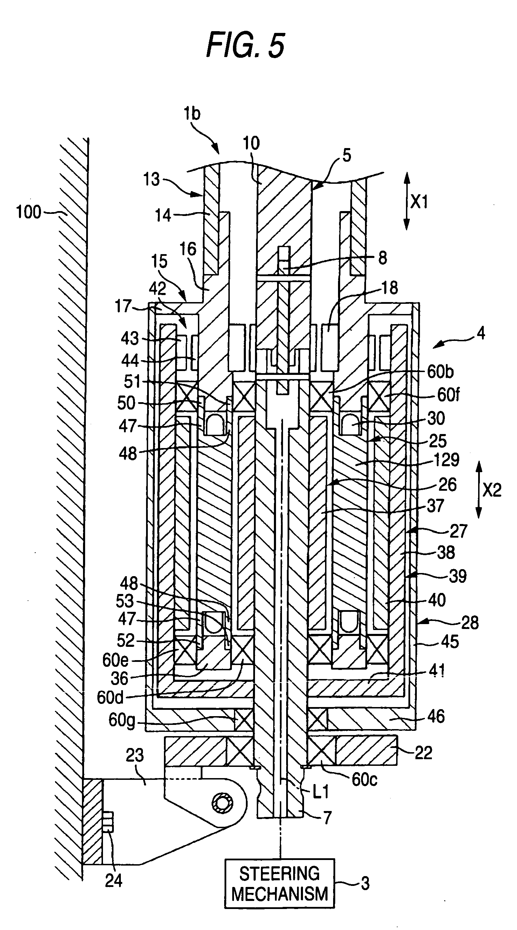

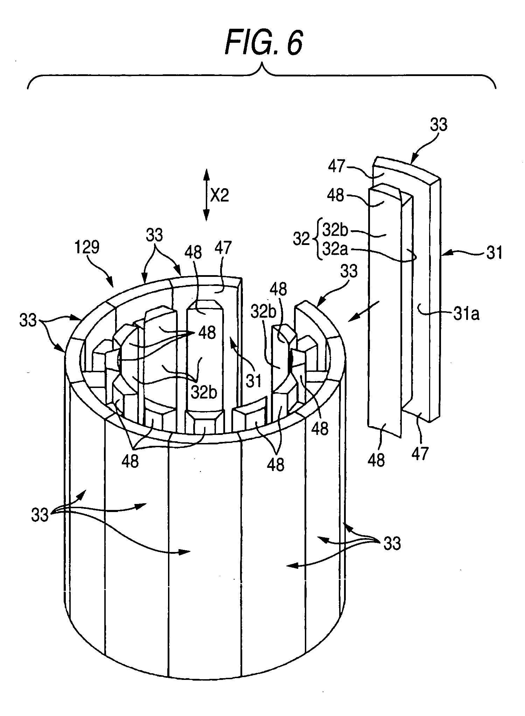

FIG. 5 is an illustrative enlarged cross-sectional view of a part of an electric power steering apparatus 1b according to still another embodiment of the invention. FIG. 6 is an illustrative view illustrating the appearance of a stator core 129 provided in the electric power steering apparatus 1b according to the still another embodiment of the invention. In FIGS. 5 and 6, a component equivalent to each part shown in FIGS. 2 and 3 is designated with the same reference numeral as that used to denote the equivalent part shown in FIGS. 2 and 3. Thus, the description of such components is omitted.

Referring to FIG. 5, the embodiment illustrated in FIG. 5 differs from that illustrated in FIG. 2 mainly in that the inner cylinder 34 and the outer cylinder 35 shown in FIG. 2 are not provided in the embodiment illustrated in FIG. 5, and that the stator core 129 is fixed directly to the second tube 15. Such differences are described more specifically in the following description.

Referring to FIG. 6, each of parts of both end portions in an axial direction X2 of the stator core 129 is extended in the axial direction X2 of the stator core 129. That is, a couple of extension parts (i.e., a first extension part 47 and a second extension part 48) are provided at both end portions of the stator core 129, respectively.

More particularly, both end portions in the axial direction X2 of the yoke 31 are extended in the axial direction X2 and constitute the first extension part 47. Both end portions in the axial direction X2 of the circumferential extension part 32b, which is a part of the teeth 32, are extended in the axial direction X2 and constitute the second extension part 48. The first extension part 47 and the second extension part 48 are annular and face each other radially across a gap. The first extension part 47 coaxially surrounds the second extension part 48 across a gap in a radial direction of the stator core 129.

Referring to FIG. 5, a couple of annular step portions are formed at the bottom part of the cylindrical portion 16 of the second tube 15. A couple of annular concave portions 51 and 50 are formed between the bottom part of the cylindrical portion 16 and the bearing 60b disposed on the inner periphery of the bottom part thereof and between the bottom part of the cylindrical portion 16 and the bearing 60f disposed on the outer periphery of the bottom part thereof, respectively. The first extension part 47 and the second extension part 48, which are provided at the upper side in the axial direction X2, are, for example, press-fit into the couple of the annular concave portions 50 and 51, respectively. Consequently, the stator core 129 is fixed to the second tube 15. The stator core 129 is fixed to the vehicle-body-side member 100 via the second tube 15.

A couple of annular step portions are formed at the top portion of the support member 36. A couple of annular concave portions 53 and 52 are formed between the top portion of the support member 36 and the bearing 60d disposed on the inner periphery of this top portion and between the top portion of the support member 36 and the bearing 60e disposed on the outer periphery of this top portion, respectively. The first extension part 47 and the second extension part 48, which are provided at a lower side in the axial direction X2, are, for example, press-fit into a couple of the annular concave portions 52 and 53, respectively. Consequently, the support member 36 is fixed to the stator core 129.

In the present embodiment, each of the first extension part 47 and the second extension part 48, which is a part of the stator core 129, is fixed to the second tube 15. Thus, the stator core 129 can securely be fixed to the second tube 15. That is, the stator 25 can securely be fixed to the second tube 15. Consequently, a stable rotating torque can be transmitted from the electric motor 4 to the output shaft 7. According to the present embodiment, the number of components can be reduced, as compared with the embodiment illustrated in FIG. 2.

Incidentally, FIGS. 5 and 6 illustrate a case where the first extension part 47 is integrally formed of the yoke 31 and a single member. The first extension part 47 according to the invention is not limited thereto. The first extension part 47 can be formed of the yoke 31 and another member and can be fixed to the yoke 31. Similarly, FIGS. 5 and 6 illustrate a case where the second extension part 48 is integrally formed of the teeth 32 and a single member. The second extension part 48 according to the invention is not limited thereto. The second extension part 48 can be formed of the teeth 32 and another member and can be fixed to the teeth 32.

The invention is not limited to the aforementioned embodiments. Various modifications can be made within the scope of the invention, which is described in claims. For instance, in the embodiment illustrated in FIG. 2, an example of fixing the inner cylinder 34 and the outer cylinder 35 to the second tube 15 by welding or adhesion has been described. However, similarly to the embodiment illustrated in FIG. 5, the inner cylinder 34 and the outer cylinder 35 can be fixed to the second tube 15 by press-fitting. Similarly, the support member 36 can be fixed to the inner cylinder 34 and the outer cylinder 35 by press-fitting.

In the embodiment illustrated in FIG. 5, an example of fixing the stator core 129 to the second tube 15 by press-fitting has been described. However, the stator core 129 can be fixed to the second tube 15 by welding or adhesion. Similarly, the support member 36 can be fixed to the stator core 129 by welding or adhesion.

In the aforementioned embodiments, an example of applying the invention to what is called a column-assist type vehicle steering apparatus has been described. However, the vehicle steering apparatus according to the invention is not limited to that of the column-assist type. The vehicle steering apparatus according to the invention can be what is called a pinion-assist type vehicle steering apparatus. Alternatively, the vehicle steering apparatus according to the invention can be what is called a rack-assist type vehicle steering apparatus. Alternatively, the vehicle steering apparatus according to the invention can be what is called a steer-by-wire type vehicle steering apparatus in which a steering member and a steering mechanism are not mechanically connected to each other.

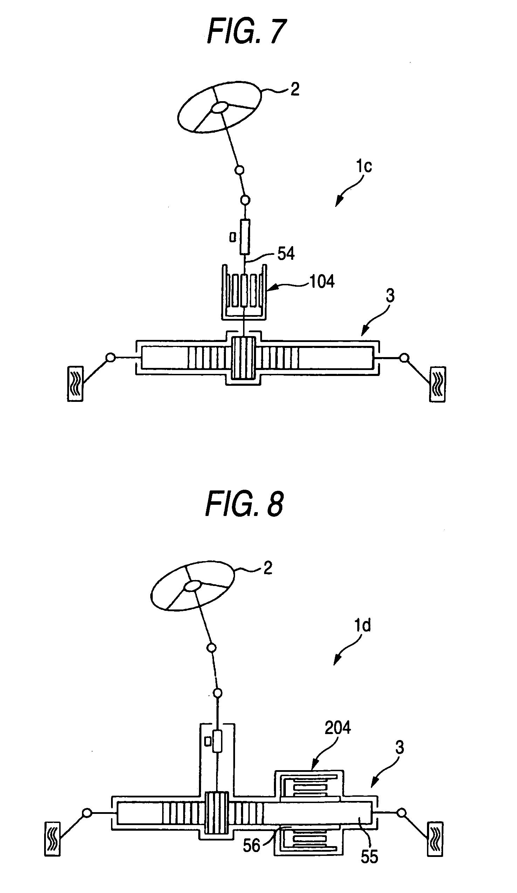

More specifically, an electric motor 104 including a stator, an inner rotor and an outer rotor can coaxially be connected to a pinion shaft 54 of a pinion-assist type electric power steering apparatus 1c, as illustrated in FIG. 7. In this case, the pinion shaft 54 functions as a steering shaft.

An electric motor 204 including a stator, an inner rotor and an outer rotor can coaxially be provided on a rack shaft 55 of a rack-assist type electric power steering apparatus 1d, as illustrated in FIG. 8. In addition, a motion conversion mechanism 56, for example a ball screw, for converting a rotation of an electric motor 204 into an axial movement of a rack shaft 55 can intervene between the electric motor 204 and the rack shaft 55. In this case, the rack shaft 55 functions as a steering shaft.

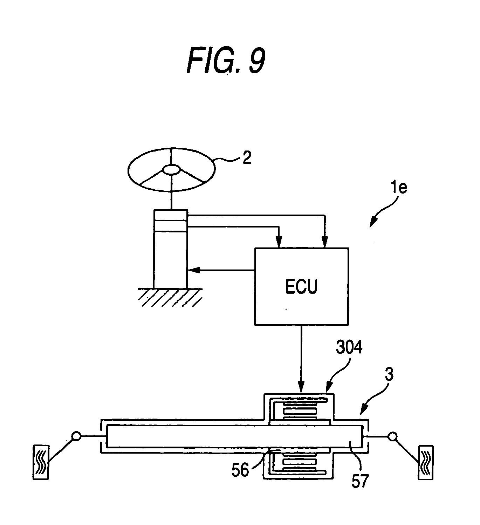

An electric motor 304 including a stator, an inner rotor and an outer rotor can coaxially be provided on a steering shaft 57 of a steer-by-wire type vehicle steering apparatus 1e, as illustrated in FIG. 9. In addition, a motion conversion mechanism 56, for example a ball screw, can intervene between the electric motor 304 and the steering shaft 57.

An electric motor provided in a vehicle steering apparatus includes a stator coaxially surrounding a steering shaft, an inner rotor disposed on the inner periphery of the stator, and an outer rotor disposed on the outer periphery of the stator. The facing area between the stator and the rotor can be increased by providing the inner rotor and the outer rotor in the electric motor. Consequently, the electric motor can be miniaturized while a certain output thereof is maintained. The vehicle steering apparatus can be miniaturized by miniaturizing the electric motor.

## Claims

1. A vehicle steering apparatus having an electric motor, provided coaxially with a steering shaft, for giving a steering force to said steering shaft,
wherein said electric motor includes an annular stator fixed to a vehicle-body-side member, a cylindrical inner rotor configured to face an inner periphery of said stator and to be rotatable around an axis line of said steering shaft, and a cylindrical outer rotor configured to face an outer periphery of said stator and to be rotatable around the axis line of said steering shaft.

2. The vehicle steering apparatus according to claim 1, wherein said outer rotor is served as a housing of said electric motor.

3. The vehicle steering apparatus according to claim 1, wherein said stator is sandwiched between an inner cylinder and an outer cylinder, which are fixed to said vehicle-body-side member.

4. The vehicle steering apparatus according to claim 1, wherein said stator includes a stator core which includes an annular yoke, and a plurality of teeth formed on an inner periphery of said yoke so as to be projected therefrom and as to be arranged in a circumferential direction of said stator at intervals so that a coil is wound around each of said plurality of teeth;
an end portion of said yoke is located in an axial direction of said stator in said yoke and includes a first extension part extended in the axial direction of said stator;
an end portion of each of said teeth is located in the axial direction of said stator therein and includes a second extension part extended in the axial direction of said stator; and
said first extension part and said second extension part are fixed to said vehicle-body-side member.
